# EUROPÄISCHE PATENTSCHRIFT

(11) **EP 1 462 327 B1**
(45) Veröffentlichungstag und Bekanntmachung des Hinweises auf die Patenterteilung: **23.04.2008**
(21) Anmeldenummer: 03027618.2
(22) Anmeldetag: 02.12.2003
(51) Int. Cl.: B60S 1/34, B60S 1/40

(54) **Gelenkarm aus Kunststoff für einen Scheibenwischer**
Plastic articulated arm for a windscreen wiper
Bras articulé en plastique pour un essuie-glace

(30) Priorität: 26.03.2003 DE 10313536
(43) Veröffentlichungstag der Anmeldung: 29.09.2004
(73) Patentinhaber: ROBERT BOSCH GMBH, 70442 Stuttgart (DE)
(72) Erfinder: Weiler, Michael, 363-9 Chungchongbuk-Do (KR); Mayer, Stephan, 76137 Karlsruhe (DE)

(56) Entgegenhaltungen:
- DE-A1- 3 340 449
- US-A- 4 598 438
- PATENT ABSTRACTS OF JAPAN Bd. 2000, Nr. 13, 5. Februar 2001 (2001-02-05) -& JP 2000 272478 A (ASMO CO LTD), 3. Oktober 2000 (2000-10-03)
- PATENT ABSTRACTS OF JAPAN Bd. 2002, Nr. 03, 3. April 2002 (2002-04-03) -& JP 2001 315622 A (NIFCO INC), 13. November 2001 (2001-11-13)
- PATENT ABSTRACTS OF JAPAN Bd. 2000, Nr. 15, 6. April 2001 (2001-04-06) -& JP 2000 355270 A (ASMO CO LTD), 26. Dezember 2000 (2000-12-26)

## Beschreibung

### Stand der Technik

Die Erfindung geht von einem Gelenkarm aus Kunststoff für einen Scheibenwischer nach dem Oberbegriff des Anspruchs 1 aus.

Bekannte Scheibenwischer weisen einen Gelenkarm auf, der mit einem Ende auf einer von einem Wischermotor angetriebenen Wischerwelle sitzt. An seinem freien, äußeren Ende ist ein Wischblatt angelenkt. Dieses besitzt ein in der Regel mehrgliederiges Tragbügelsystem mit einem Mittelbügel. An diesem sind untergeordnete Bügel angelenkt, von denen zumindest einige mit Krallen an ihren Enden eine Wischleiste sowie meist zwei in Nuten eingelegte Federschienen halten. Das mehrgliederige Tragbügelsystem und die Federschienen ermöglichen, dass sich beim Wischen die Wischleiste mit einem gleichmäßigen Auflagedruck einer gebogenen Windschutzscheibe anpasst.

Der Gelenkarm der zu betrachtenden Art besteht aus Kunststoff und weist ein u-förmiges, zu einer Fahrzeugscheibe hin offenes Querschnittprofil auf. Zudem ist am äußeren Ende eine Halte- und Führungseinrichtung zum Anlenken des Wischblatts angeformt, die von einem Führungsblock und einem Klipp gebildet wird. Der Führungsblock verlängert den Gelenkarm in Längsrichtung und besitzt starre, im Wesentlichen parallel verlaufende seitliche Führungswangen. Der Klipp ist im Mittelbereich des Führungsblocks angeordnet und weist eine radiale Lagerfläche sowie Federzungen auf, die durch Schlitze von den Führungswangen getrennt sind.

Der Führungsblock wird von oben in einen Einhängekasten des Mittelbügels eines Tragbügelsystems eingesetzt, wobei der Klipp einen zwischen den Seitenwänden des Einhängekastens angeordneten Gelenkbolzen umfasst und die Führungswangen an den Seitenwänden des Einhängekastens anliegen. Somit bildet der in der radialen Lagerfläche gelagerte Gelenkbolzen ein Gelenk, das eine Schwenkbewegung zwischen dem Gelenkarm und dem Wischblatt ermöglicht, während die Führungswangen des Führungsblocks das Wischblatt seitlich führen. Ein derartiger Gelenkarm ist beispielsweise aus der JP-A-2001315622 oder DE-A-3340449 bekannt.

Zweckmäßigerweise wird der Gelenkarm in seiner endgültigen Form in einem Spritzgussverfahren hergestellt, sodass keine Nachbearbeitung notwendig ist. Allerdings weisen diese Bauteile fertigungsbedingte Toleranzen auf. Daher muss zwischen den starren Führungswangen des Führungsblocks und den Seitenwänden des Einhängekastens ein Spiel vorgesehen werden. Dieses vergrößert sich während der Betriebsdauer durch Verschleiß. Ein seitliches Spiel zwischen dem Gelenkarm und dem Wischblatt erzeugt eine ratternde Bewegung und wirkt sich negativ auf das Wischergebnis aus. Ferner werden durch das Spiel nicht gewünschte Geräusche verursacht. Diese werden ungedämpft über die starre Führung auf den Gelenkarm übertragen.

Aus der US-A-4,598,438 ist ein Wischblatt bekannt, das im mittleren Bereich einen Einhängekasten mit einem an den Seitenwangen des Einhängekastens angenieteten Gelenkstift aufweist. An den Gelenkstift kann mithilfe einer aus einem federelastischen Kunststoff bestehenden Rastfeder, die als Verbindungsstück dient, ein Wischarm angelenkt werden. Die Rastfeder, die am geraden Ende des Wischarms angespritzt sein kann, besitzt an ihrem vorderen, freien Ende eine offene Nabe, mit der sie auf den Gelenkstift aufgeklippst werden kann. An ihrem gegenüberliegenden Ende besitzt sie quer zur Längsrichtung verlaufende Federzungen, die durch eine Öffnung in der Deckwand des Gelenkarms in das Innere des Gelenkarms greifen und mit ihren Außenseiten an den Innenseiten des Gelenkarms mit einer Vorspannung anliegen.

### Vorteile der Erfindung

Nach der Erfindung weist ein an einem Gelenkarm angeordneter Führungsblock an seinen Längsseiten elastisch nachgiebige Elemente auf, die im montierten Zustand an den Seitenwänden des Einhängekastens eines Mittelbügels mit einer Vorspannung anliegen. Die elastisch nachgiebigen Elemente werden durch Federzungen gebildet, die sich in Längsrichtung des Führungsblocks und zu beiden Seiten eines Klipps erstrecken, mit dem sie über einen gemeinsamen Befestigungssteg verbunden sind. Der Klipp hält lediglich das angelenkte Wischblatt in einer radialen Lagerfläche fest und ermöglicht eine notwendige Schwenkbewegung um die Gelenkachse. Er beeinflusst die Elastizität der seitlich wirkenden Federzungen in keiner Weise.

Indem die Federzungen mit einer Vorspannung an den Seitenwänden des Einhängekastens anliegen, wird das Wischblatt während der Wischbewegung spielfrei in seitlicher Richtung geführt. Dies bewirkt ein gutes Wischergebnis sowie eine Geräuschoptimierung, da ratternde Bewegungen und Schwingungen des Wischblatts verhindert werden. Bei einer genügend großen Vorspannung werden nicht nur die Fertigungstoleranzen der montierten Bauteile ausgeglichen, sondern zudem wird die spielfreie Führung über die gesamte Lebensdauer gewährleistet, da auftretender Verschleiß wirksam kompensiert wird.

Eine definierte Vorspannung sowie Führungskraft der Wischblattführung wird durch die entsprechende Dimensionierung der Federzungen realisiert. Eine flache Federkennlinie entsteht beispielsweise, wenn die Federzungen möglichst lang ausgebildet sind. Da genügend freier Bauraum im Innenprofil des Gelenkarms vorhanden ist, können die Federeigenschaften in jedem Fall bedarfsgerecht eingestellt werden. Die Federkraft muss für normale Wischbedingungen bei Regen ausgelegt werden. Blockiert das Wischblatt, z.B. bei Schnee oder Eis oder wird es sonst wie überbelastet, ist es vorteilhaft, dass der Federweg der Federzungen durch Anschläge begrenzt ist, um bei hohen Seitenkräften eine Überbeanspruchung der Zungen zu verhindern. Dies geschieht bei einer Ausgestaltung der Erfindung durch Rippen, die an den Innenseiten der Außenwände des Gelenkarms angeordnet sind. Diese verhindern eine Überbelastung der Federzungen, indem sie hohe Drehmomente um eine Hochachse und große Seitenkräfte auf das Wischblatt an den Außenseiten des Einhängekastens abstützen.

Nach einer weiteren Ausgestaltung der Erfindung weist der Befestigungssteg an seiner Stirnseite einen Quersteg auf, der mit einem Spiel in eine Aussparung der Federzungen eingreift. Nach dem Federweg stützt sich die Belastung der Federzungen am Quersteg ab, so dass das Spiel im montierten Zustand dem maximalen Federweg entspricht. In einer weiteren Ausgestaltung besitzen die Federzungen an ihren freien Stirnseiten einander zugewandte Schenkel, die einen Spalt bilden, der ebenfalls den maximalen Federweg der Federzungen nach innen bestimmt. Die Schenkel überdecken zudem stirnseitig den Zwischenraum zwischen dem Befestigungssteg und den Federzungen. Sie bieten damit Schutz vor Falschmontagen. Die Seitenwände des Einhängekastens können nicht versehentlich in die Zwischenräume gelangen, sondern können nur in den dafür vorgesehen Spalt zwischen den Federzungen und den Außenwänden des Gelenkarms eingefügt werden.

Der Führungsblock ist in einem u-förmigen Querschnittprofil des Gelenkarms angeordnet und wird zweckmäßigerweise beim Spritzgießen mit ausgeformt. Da der Gelenkarm nach dem Entformen seine endgültige Gestalt besitzt, entstehen keine zusätzlichen Montagearbeitsgänge. Ferner bestehen keine übermäßigen Forderungen bezüglich der Maßhaltigkeit, da die Federzungen die üblichen Fertigungstoleranzen ausgleichen. Dabei kann der Gelenkarm aus Standardmaterial, z.B. Polybutylenterephtalat (PBT) mit 30% Glasfasern, hergestellt werden.

Das Wischblatt wird auf einfache Weise durch einklippsen mit dem Gelenkarm montiert. Danach sind die erfindungsgemäße Halte- und Führungseinrichtung vollständig sowie das Wischblatt teilweise vom Profil des Gelenkarms überdeckt, wodurch ein ansprechendes Design des Scheibenwischers entsteht.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines Einhängekastens eines Mittelbügels eines Wischblatts,
- Fig. 2: eine perspektivische Teilansicht eines Gelenkarms im Bereich eines Führungsblocks,
- Fig. 3: eine perspektivische Ansicht eines Führungsblocks,
- Fig. 4: eine Draufsicht auf einen Führungsblock und
- Fig. 5-8: Varianten zu Fig. 4.

### Beschreibung der Ausführungsbeispiele

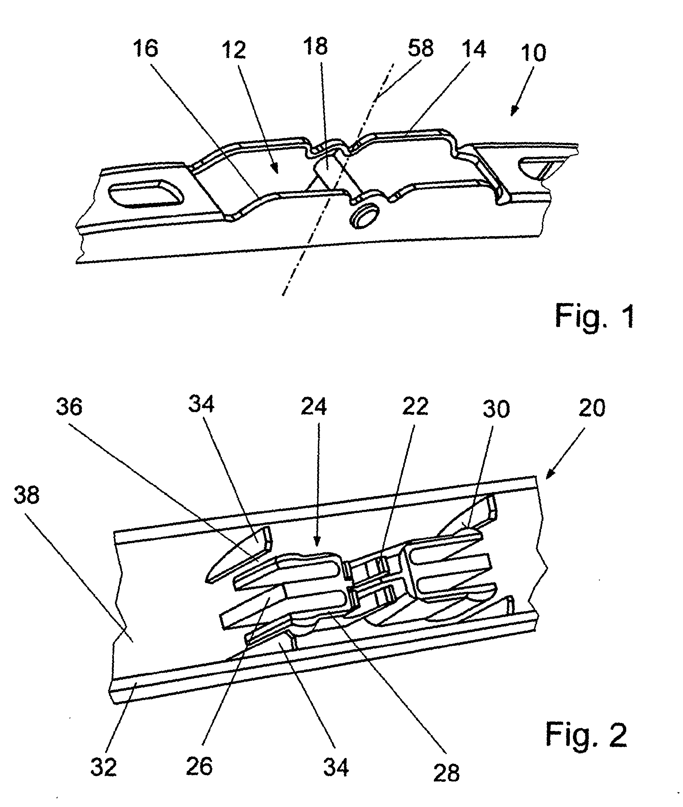

Von einem Scheibenwischer sind nur die Teile eines Wischblatts mit einem Mittelbügel 10 (Fig. 1) und eines Gelenkarms 20 (Fig. 2) dargestellt, soweit sie für das Verständnis der Erfindung notwendig sind. Der Mittelbügel 10 besitzt einen Einhängekasten 12 mit zwei parallel verlaufenden Seitenwänden 14 und 16. Diese sind durch einen Gelenkstift 18 miteinander verbunden, welcher die Gelenkachse des Gelenks zwischen dem Wischblatt und dem Gelenkarm 20 bildet. Der Gelenkarm 20 ist aus Kunststoff hergestellt und weist ein u-förmiges, zu einer nicht dargestellten Fahrzeugscheibe hin offenes Querschnittprofil auf, das von zwei Außenwänden 32 und einer Decke 38 gebildet wird. Im Innenraum des Profils ist eine Halte- und Führungseinrichtung, bestehend aus einem Klipp 22 und einem Führungsblock 24, für das Wischblatt angeordnet, die zweckmäßigerweise beim Herstellen des Gelenkarms 20 in einem Spritzgussverfahren mit ausgeformt werden und über einen Befestigungssteg 26 fest mit dem Gelenkarm 20 verbunden sind.

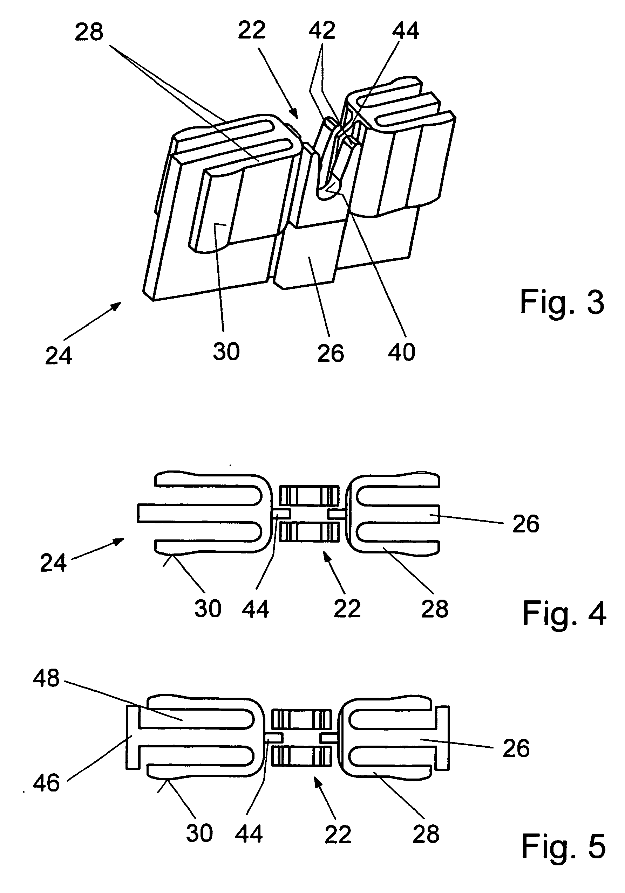

Der Führungsblock 24 erstreckt sich in Längsrichtung des Gelenkarms 20 und zu beiden Seiten des Klipps 22, der zum Befestigen des Wischblatts und gleichzeitig als Gelenknabe des Gelenks zwischen dem Wischblatt und dem Gelenkarm 20 dient. Der Klipp 22 ist quer zur Gelenknabe geteilt und weist radiale Lagerflächen 40 auf, in denen der Gelenkstift 18 schwenkbar gelagert ist (Fig. 3 und Fig. 4) und durch Federzungen 42 gehalten wird. Diese schließen sich an die Lagerflächen 40 zu beiden Seiten an und besitzen zur besseren Montage schräg verlaufende Führungsflächen. Ebenfalls als Montagehilfe beim Einfädeln des Gelenkstifts 18 dienen zwei symmetrisch zum Klipp 22 angeordnete Rippen 44, die am Führungsblock 24 angeformt sind und zwischen die Teile des geteilten Klipps 22 eingreifen.

An seinen Längsseiten weist der Führungsblock 24 elastisch nachgiebige Elemente auf, welche durch Federzungen 28 gebildet werden und zur Führung des Wischblatts dienen. Die Federzungen 28 sind im Bereich des Klipps 22 mit dem Führungsblock 24 fest verbunden. An ihren elastisch nachgiebigen Enden besitzen die Federzungen 28 nach außen weisende Kontaktflächen 30, die ballig ausgeführt sind, wodurch mit den Gegenflächen eindeutige Anlagepunkte geschaffen werden. Die Federzungen 28 weichen bei der Montage des Wischblatts nach innen federnd aus und liegen dann mit den Kontaktflächen 30 an den Seitenwänden 14 und 18 des Einhängekastens 12 an.

Während des Wischvorgangs greifen relativ große Seitenkräfte am Wischblatt an und versuchen es seitlich zum Gelenkarm 20 zu verschieben oder um eine Hochachse 58 relativ zum Gelenkarm 20 zu verdrehen. Um diese Verdrehung auf ein definiertes Maß zu begrenzen, sind an den Innenseiten der Außenwände 32 Rippen 34 vorgesehen, die als Anschlag dienen. Durch die Rippen 34 werden ein übermäßiges Auslenken und Überbeanspruchen der Federzungen 28 verhindert.

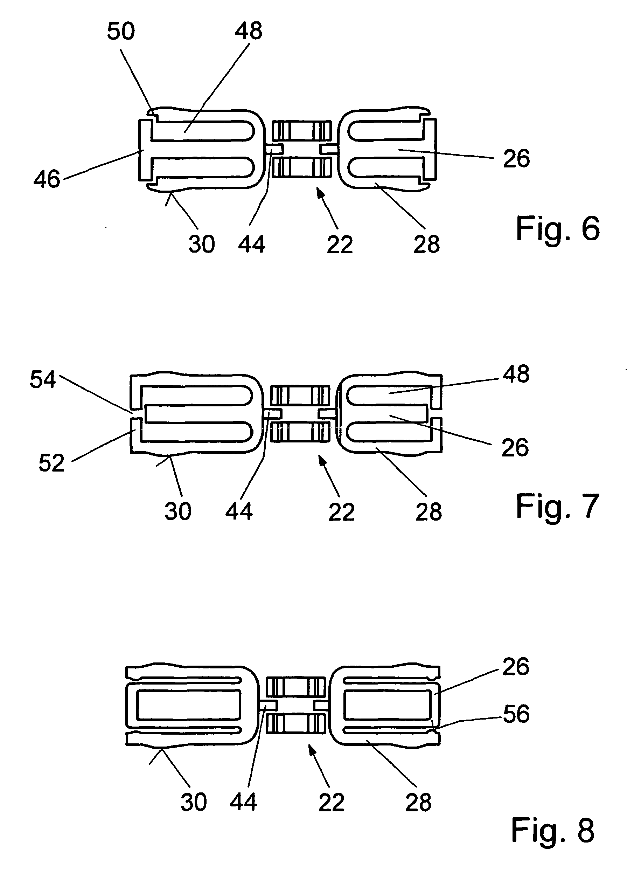

In einer weiteren Ausgestaltung weist der Befestigungssteg 26 einen stirnseitig angeformten Quersteg 46 auf, der einen Zwischenraum 48 zwischen dem Befestigungssteg 26 und den Federzungen 28 überdeckt (Fig. 5). Der Quersteg 46 verhindert, dass die Seitenwände 14 oder 16 während der Montage versehentlich in den Zwischenraum 48 gelangen und die Federzungen 28 beschädigen. Neben diesem Schutz vor Falschmontagen kann der Quersteg 46 zudem als Anschlag dienen, welcher den Federweg der Federzungen 28 nach innen begrenzt. In einer Ausführung nach Fig. 6 greift der Quersteg 46 mit einem Spiel in eine Aussparung 50 der Federzungen 28 ein.

Eine Variante nach Fig. 7 zeigt an freien Stirnseiten zweier parallel verlaufender Federzungen 28 einander zugewandte Schenkel 52. Diese bilden einen Spalt 54, der den Federweg der Federzungen 28 nach innen begrenzt. Bei einer weiteren Ausgestaltung ist der Befestigungssteg 26 als Hohlprofil ausgebildet, an dem die Federzungen 28 mit angeformten balligen Kontaktflächen 56 nach einem kurzen Federweg zur Anlage kommen und so gegen eine Überlastung geschützt werden (Fig. 8). Das Hohlprofil füllt den Freiraum zwischen den Federzungen weitgehend aus, so dass auch eine Fehlmontage vermieden wird.

Zur Montage wird das Wischblatt in den Gelenkarm 20 eingeklippst, wobei die Seitenwände 14 und 16 des Einhängekastens 12 jeweils in einen Spalt 36 zwischen den Außenwänden 32 des Gelenkarms 20 und den Federzungen 28 des Führungsblocks 24 eingefügt werden. Die Federzungen 28 werden dabei leicht nach innen ausgelenkt und liegen dann mit einer Vorspannung an den Innenflächen der Seitenwände 14 und 16 an, so dass das Wischblatt in seitlicher Richtung spielfrei geführt wird.

Der Führungsblock 24 wird von den Außenwänden 32 des Gelenkarms 20 seitlich vollständig überdeckt und auch das Wischblatt taucht im montierten Zustand teilweise in dessen Querschnittprofil ein, so dass vorteilhafterweise eine niedrige Bauhöhe des Scheibenwischers erreicht wird.

### Bezugszeichen

- 10: Mittelbügel
- 12: Einhängekasten
- 14: Seitenwand
- 16: Seitenwand
- 18: Gelenkstift
- 20: Gelenkarm
- 22: Klipp
- 24: Führungsblock
- 26: Befestigungssteg
- 28: Federzunge
- 30: Kontaktfläche
- 32: Außenwand
- 34: Rippe
- 36: Spalt
- 38: Decke
- 40: Lagerfläche
- 42: Federzunge
- 44: Rippe
- 46: Quersteg
- 48: Zwischenraum
- 50: Aussparung
- 52: Schenkel
- 54: Spalt
- 56: Kontaktfläche
- 58: Hochachse

## Patentansprüche

1. Gelenkarm (20) aus Kunststoff für einen Scheibenwischer, der an seinem äußeren Ende eine Halte- und Führungseinrichtung (22, 24) für ein Wischblatt aufweist, wobei ein Führungsblock (24), der sich in Längsrichtung des Gelenkarms (20) erstreckt, und ein Klipp (22), der fest mit dem Gelenkarm (20) verbunden ist, in einen Einhängekasten (12) eines Mittelbügels (10) des Wischblatts eingreift, das durch den Klipp (22) gelenkig gehalten und durch den Führungsblock (24) seitlich geführt wird, und am Längsseiten des Führungsblocks elastisch nachgiebige Elemente vorgesehen sind, die im montierten Zustand an den Seitenwänden (14, 16) des Einhängekastens (12) mit einer Vorspannung anliegen, **dadurch gekennzeichnet, dass** der Führungsblock (24) über einen Befestigungssteg (26) mit dem Gelenkarm (20) fest verbunden ist und die elastisch nachgiebigen Elemente Federzungen (28) sind, die sich in Längsrichtung des Führungsblocks (24) erstrecken, und mit diesem im Bereich des Klipps (22) verbunden sind.

2. Gelenkarm (20) nach Anspruch 2, **dadurch gekennzeichnet, dass** sich der Führungsblock (24) und die Federzungen (28) in Längsrichtung des Gelenkarms (20) zu beiden Seiten des Klipps (22) erstrecken.

3. Gelenkarm (20) nach einem der vorhergehenden Ansprüche, **dadurch gekennzeichnet, dass** der Federweg der elastisch nachgiebigen Federzungen (28) nach innen begrenzt ist.

4. Gelenkarm (20) nach Anspruch 3, **dadurch gekennzeichnet, dass** der Befestigungssteg (26) des Führungsblocks (24), der zwischen den Federzungen (28) angeordnet ist, deren Federweg begrenzt.

5. Gelenkarm (20) nach einem der vorhergehenden Ansprüche, **dadurch gekennzeichnet, dass** stirnseitig am Befestigungssteg (26) ein Quersteg (46) angeformt ist, der stirnseitig einen Zwischenraum (48) zwischen dem Befestigungssteg (26) und den Federzungen (28) überdeckt.

6. Gelenkarm (20) nach Anspruch 5, **dadurch gekennzeichnet, dass** der Quersteg (46) mit einem Spiel in eine Aussparung (50) der Federzungen (28) eingreift und das Spiel im montierten Zustand dem begrenzten Federweg entspricht.

7. Gelenkarm (20) nach einem der Ansprüche 1 bis 3, **dadurch gekennzeichnet, dass** die jeweils zwei zueinander parallel verlaufende Federzungen (28) an ihren freien Stirnseiten einander zugewandte Schenkel (52) aufweisen, die einen Spalt (54) bilden, der im montierten Zustand dem begrenzten.Federweg entspricht.

8. Gelenkarm (20) nach einem der vorhergehenden Ansprüche, **dadurch gekennzeichnet, dass** der Befestigungssteg (26) als Hohlprofil ausgebildet ist.

9. Gelenkarm (20) nach einem der vorhergehenden Ansprüche, **dadurch gekennzeichnet, dass** Kontaktflächen (30, 54) zwischen den Federzungen (28) und den Seitenwänden (14, 16) des Einhängekastens (12) bzw. dem Befestigungssteg (26) ballig ausgeführt sind.

10. Gelenkarm (20) nach einem der vorhergehenden Ansprüche, **dadurch gekennzeichnet, dass** der Führungsblock (24) von Außenwänden (32) des Gelenkarms (20) seitlich überdeckt werden.

11. Gelenkarm (20) nach Anspruch 10, **dadurch gekennzeichnet, dass** an den Innenseiten der Außenwände (32) Rippen (34) vorgesehen sind, die eine Drehbewegung des Mittelbügels (10) um eine Hochachse (58) begrenzen.

## Claims

1. Plastic articulated arm (20) for a windscreen wiper, the articulated arm having, at its outer end, a retaining and guide device (22, 24) for a wiper blade, wherein a guide block (24), which extends in the longitudinal direction of the articulated arm (20), and a clip (22), which is connected fixedly to the articulated arm (20), engage in a mounting box (12) of a central bracket (10) of the wiper blade which is held in an articulated manner by the clip (22) and is guided laterally by the guide block (24), and elastically flexible elements are provided on the longitudinal sides of the guide block, said elements, in the fitted state, bearing with prestress against the side walls (14, 16) of the mounting box (12), **characterized in that** the guide block (24) is connected fixedly to the articulated arm (20) via a fastening web (26), and the elastically flexible elements are spring tongues (28) which extend in the longitudinal direction of the guide block (24) and are connected to the latter in the region of the clip (22).

2. Articulated arm (20) according to Claim 1,
**characterized in that** the guide block (24) and the spring tongues (28) extend on both sides of the clip (22) in the longitudinal direction of the articulated arm (20).

3. Articulated arm (20) according to one of the preceding claims, **characterized in that** the spring travel of the elastically flexible spring tongues (28) inwards is restricted.

4. Articulated arm (20) according to Claim 3,
**characterized in that** the fastening web (26) of the guide block (24) is arranged between the spring tongues (28), the spring travel of which is restricted.

5. Articulated arm (20) according to one of the preceding claims, **characterized in that** a transverse web (46) is integrally formed on the end side of the fastening web (26) and covers the end side of an intermediate space (48) between the fastening web (26) and the spring tongues (28).

6. Articulated arm (20) according to Claim 5,
**characterized in that** the transverse web (46) engages with play in a cutout (50) of the spring tongues (28) and, in the fitted state, the play corresponds to the restricted spring travel.

7. Articulated arm (20) according to one of Claims 1 to 3, **characterized in that** the two spring tongues (28) running parallel to each other in each case have, on their free end sides, mutually facing limbs (52) which form a gap (54) which, in the fitted state, corresponds to the restricted spring travel.

8. Articulated arm (20) according to one of the preceding claims, **characterized in that** the fastening web (26) is designed as a hollow profile.

9. Articulated arm (20) according to one of the preceding claims, **characterized in that** contact surfaces (30, 54) between the spring tongues (28) and the side walls (14, 16) of the mounting box (12) or the fastening web (26) are of spherical design.

10. Articulated arm (20) according to one of the preceding claims, **characterized in that** the guide block (24) is covered laterally by outer walls (32) of the articulated arm (20).

11. Articulated arm (20) according to Claim 10, **characterized in that** ribs (34) which restrict a rotational movement of the central bracket (10) about a vertical axis (58) are provided on the insides of the outer walls (32).

## Revendications

1. Bras articulé (20) en matière plastique pour un essuie-glace, dont l'extrémité extérieure comporte une installation de fixation et de guidage (22, 24) pour un balai d'essuie-glace,
un bloc de guidage (24) s'étendant dans la direction longitudinale du bras articulé (20) et un organe d'enclipsage (22) relié solidairement au bras articulé (20) pénétrant dans un boîtier d'accrochage (12) du palonnier central (10) du balai d'essuie-glace, pour être tenu de manière articulée par l'organe d'enclipsage (22) et être guidé latéralement par le bloc de guidage (24), et les côtés longitudinaux du bloc de guidage comportent des éléments élastiques souples qui, à l'état installé, s'appliquent contre les parois latérales (14, 16) du boîtier d'accrochage (12) avec une précontrainte,
**caractérisé en ce que**
le bloc de guidage (24) est relié solidairement au bras articulé (20) par une entretoise de fixation (26) et les éléments élastiques souples sont des languettes élastiques (28) s'étendant dans la direction longitudinale du bloc de guidage (24) en étant reliées à celui-ci dans la région de l'organe d'enclipsage (22).

2. Bras articulé (20) selon la revendication 1,
**caractérisé en ce que**
le bloc de guidage (24) et les languettes élastiques (28) s'étendent dans la direction longitudinale du bras articulé (20), des deux côtés de l'organe d'enclipsage (22).

3. Bras articulé (20) selon l'une des revendications précédentes,
**caractérisé en ce que**
la branche élastique des languettes élastiques souples (28) est délimitée vers l'intérieur.

4. Bras articulé (20) selon la revendication 3,
**caractérisé en ce que**
l'entretoise de fixation (26) du bloc de guidage (24) installée entre les languettes élastiques (28) limite leur course élastique.

5. Bras articulé (20) selon l'une des revendications précédentes,
**caractérisé en ce que**
l'entretoise transversale (46) est formée sur la face frontale de l'entretoise de fixation (26), cette entretoise transversale couvrant du côté frontal l'espace intermédiaire (48) entre l'entretoise de fixation (26) et les languettes élastiques (28).

6. Bras articulé (20) selon la revendication 5,
**caractérisé en ce que**
l'entretoise transversale (46) pénètre avec du jeu dans un dégagement (50) des languettes élastiques (28) et à l'état monté, le jeu correspond à la course de ressort, limitée.

7. Bras articulé (20) selon l'une des revendications 1 à 3,
**caractérisé en ce que**
deux languettes élastiques (28) qui sont respectivement parallèles, ont sur leur face frontale libre, des branches (52) tournées l'une vers l'autre, formant un intervalle (54) qui, à l'état monté, correspond à la course de ressort limitée.

8. Bras articulé (20) selon l'une des revendications précédentes,
**caractérisé en ce que**
l'entretoise de fixation (26) est en forme de profil creux.

9. Bras articulé (20) selon l'une des revendications précédentes,
**caractérisé en ce que**
les surfaces de contact (30, 54) entre les languettes élastique (28) et les parois latérales (14, 16) du boîtier d'accrochage (12) ou de l'entretoise de fixation (26) ont une forme bombée.

10. Bras articulé (20) selon l'une des revendications précédentes,
**caractérisé en ce que**
le bloc de guidage (24) est couvert latéralement par les parois extérieures (32) du bras articulé (20).

11. Bras articulé (20) selon la revendication 10,
**caractérisé en ce que**
les faces intérieures des parois extérieures (32) comportent des nervures (34) limitant le mouvement de rotation du palonnier central (10) autour d'un axe montant (58).
